# DEMANDE DE BREVET EUROPEEN

(11) **EP 3 163 226 A1**
(43) Date de publication de la demande: **03.05.2017**
(21) Numéro de dépôt: 16196100.8
(22) Date de dépôt: 27.10.2016
(51) Int. Cl.: F25D 3/06, F28D 20/02, F25D 3/08

(54) **PLAQUE EUTECTIQUE COMPRENANT UN INDICATEUR D'ÉTAT DE CHARGE DE LA PLAQUE**

(30) Priorité: 28.10.2015 FR 1560332
(71) Demandeur: COMMISSARIAT À L'ÉNERGIE ATOMIQUE ET AUX ÉNERGIES ALTERNATIVES, 75015 Paris (FR)
(72) Inventeur: VESIN, Sébastien, 38100 GRENOBLE (FR); CHAZELLE, Benjamin, 69440 MORNANT (FR); COUTURIER, Raphaël, 38360 SASSENAGE (FR)
(74) Mandataire: Brizio Delaporte, Allison

(57) **Abrégé**

L'invention concerne une plaque eutectique (1) comprenant une enveloppe (2) étanche et rigide contenant dans son volume intérieur au moins un MCP (3) configuré pour être sous une première forme lorsque la plaque (1) est dans un état déchargé et sous une deuxième forme lorsque la plaque est dans un état chargé, le MCP (3) présentant des variations volumiques lors des changements de forme caractérisée en ce que la plaque (1) comprend un espace clos (9) configuré pour présenter une variation de volume fonction des variations volumiques du MCP (3) et un indicateur du volume de l'espace clos (9) donnant une indication sur l'état de charge de la plaque (1).Le domaine de l'invention concerne le maintien en température de produit par plaques eutectique.

L'invention trouvera une application particulière dans les transports nécessitant le maintien en températures des produits transportés, notamment la restauration ou bien encore le transport de médicaments, vaccins ou même organes en vue de greffe

## Description

La présente invention concerne une plaque eutectique comprenant un indicateur d'état de charge de la plaque.

Le domaine de l'invention concerne le maintien en température de produit par plaques eutectiques.

L'invention trouvera une application particulière dans les transports nécessitant le maintien en températures des produits transportés, notamment la restauration ou bien encore le transport de médicaments, vaccins ou même organes en vue de greffe.

### ETAT DE LA TECHNIQUE

Une plaque eutectique est composée d'une enveloppe, souvent étanche et rigide, contenant un fluide couramment appelé matériau à changement de phase ou MCP. L'enveloppe comprend classiquement une réserve d'air destinée à permettre l'expansion volumique du MCP lors de son changement de phase.

Son fonctionnement repose, pour l'absorption de chaleur, sur la fonte isotherme du matériau à changement de phase contenu dans la plaque et initialement à l'état solide. Ce changement d'état se traduit par une réaction endothermique, c'est-à-dire absorption de chaleur entrainant la production de froid, qui permet de maintenir un environnement isolé à température proche de celle de fusion du MCP.

Son fonctionnement repose, pour la production de chaleur, sur la solidification isotherme du matériau à changement de phase contenu dans la plaque et initialement à l'état liquide. Ce changement d'état se traduit par une réaction exothermique, c'est-à-dire libération de chaleur entrainant la production de chaud, qui permet de maintenir un environnement isolé à température proche de celle de solidification du MCP.

Dans la restauration, lorsque la consommation d'un plat ou d'une denrée alimentaire est différée dans le temps par rapport à sa préparation, notamment lors de son transport, le terme de liaison différée est employé.

Cette liaison différée se dissocie en deux catégories :
- la liaison chaude, avec ou sans remise en température
- la liaison froide, négative ou positive, c'est à dire surgelée ou non.

Lors d'un transport en liaison froide positive, les plats sont conservés dans une gamme de température « réglementaire », comprise entre 0 et 3°C. En règle générale, pour satisfaire cette exigence sanitaire, les plats sont transportés dans des caissons isolés équipés de plaques eutectiques, qui assurent le maintien en température des denrées transportées en compensant les déperditions thermiques vers l'extérieur.

S'il est possible de dimensionner un système de caisson et plaques eutectiques qui respectent les exigences règlementaires pour le transport de plats, il n'existe pas de système qui permet de contrôler la solidification complète du MCP contenu dans les plaques eutectiques, avant leur introduction dans le caisson isolé. Le protocole actuel pour la préparation des plaques eutectiques repose sur un contrôle de la durée de leur séjour en chambre froide, indispensable pour reconditionner la solidification du MCP. Le suivi de cette démarche empirique ne permet donc pas de fournir une preuve factuelle de la solidification complète du MCP contenu dans les plaques eutectiques. Cette contrainte exclue par voie de conséquence la possibilité d'utiliser cet équipement pour des applications très exigeantes, telles que le transport de vaccins ou d'organes, pour lesquelles la traçabilité doit être garantie.

Les plaques eutectiques existantes avec une enveloppe transparente permettant de visualiser l'état de solidification du MCP ne constitue pas un indicateur fiable de l'état de solidification au coeur de la plaque. En effet, il est courant que le MCP ne soit pas totalement congelé mais que visuellement, la réserve d'air ait disparu ou réduit donnant un aspect solide superficiel.

Il en est de même pour la liaison chaude, où l'état du MCP de la plaque eutectique doit être contrôlé de manière fiable pour assurer un maintien en température satisfaisant.

Il existe donc le besoin de proposer une solution pour donner une information fiable de l'état du MCP et donc de l'état de charge de la plaque eutectique.

### EXPOSE DE L'INVENTION

La présente invention propose à cet effet une plaque eutectique comprenant une enveloppe, avantageusement rigide et étanche, définissant un volume intérieur recevant un matériau à changement de phase (MCP). Le MCP est configuré pour être sous une première forme lorsque la plaque est à l'état déchargé et sous une deuxième forme lorsque la plaque est à l'état chargé. Le MCP présentant une variation de volume entre les deux formes. La plaque comprend de manière caractéristique un espace clos configuré pour présenter une variation de volume fonction des variations volumiques du MCP. La plaque comprend en outre un indicateur du volume de l'espace clos donnant une indication sur l'état de charge de la plaque.

Par cette disposition de l'invention, le volume de l'espace clos est modifié en fonction de la forme sous laquelle se trouve le MCP. L'espace clos présente un premier volume lorsque le MCP est sous sa première forme et un deuxième volume, avantageusement différent du premier, lorsque le MCP est sous sa deuxième forme. Cette variation de volume est visible à l'extérieur de l'enveloppe par grâce à l'indicateur et permet de donner une indication valable de l'état de charge de la plaque eutectique.

De manière avantageuse, l'indicateur comprend un élément mécanique soumis aux variations volumiques du MCP, cet élément mécanique transmet les variations volumiques du MCP à l'espace clos 9.

Préférentiellement, l'indicateur comprend également un signal visuel, sonore ou électrique qui est identifiable par l'utilisateur et indique l'état de charge de la plaque.

Avantageusement, les variations volumiques du MCP sont compensées par le volume de l'espace clos.

Préférentiellement, la plaque ne comprend pas d'autres moyens de compensation des variations volumiques du MCP.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les figures d'accompagnement suivantes dans lesquelles :
Figure 1 : vue en perspective d'une plaque eutectique
Figures 2 et 3: schémas d'une plaque eutectique avec un indicateur d'état de charge selon un premier mode de réalisation dont les figures 2a et 2b illustrent une plaque eutectique dans un état déchargé en vue du dessus (figure 2a) et en vue de côté (figure 2b) et les figures 3a et 3b illustrent une plaque eutectique dans un état chargé en vue du dessus (figure 3a) et en vue de côté (figure 3b).
Figures 4 et 5 : schémas d'une plaque eutectique en vue du dessus avec un indicateur d'état de charge selon un deuxième mode de réalisation. Figure 4 la plaque eutectique est dans un état déchargé et Figure 5 la plaque eutectique est dans un état chargé.
Figure 6 : vue en perspective d'une plaque eutectique ouverte illustrant l'agencement de l'indicateur d'état de charge dans le volume intérieur selon le deuxième mode de réalisation illustré aux figures 4 et 5.
Figures 7 et 8 : schémas d'une plaque eutectique en vue du dessus avec un indicateur d'état de charge selon un troisième mode de réalisation. Figure 7 la plaque eutectique est dans un état déchargé et Figure 8 la plaque eutectique est dans un état chargé.
Figure 9 : Vue en perspective d'une plaque eutectique ouverte illustrant l'agencement de l'indicateur d'état de charge dans le volume intérieur selon le troisième mode de réalisation illustré aux figures 7 et 8.

Les figures sont données à titre d'exemple et ne sont pas limitatives de l'invention. Elles constituent une représentation schématique de principe destinées à faciliter la compréhension de l'invention et ne sont pas nécessairement à l'échelle des applications pratiques.

### EXPOSE DETAILLE DE MODES DE REALISATION PARTICULIERS

Avant d'entamer une revue détaillée de modes de réalisation de l'invention, sont énoncées ci-après des caractéristiques optionnelles qui peuvent éventuellement être utilisées en association ou alternativement.

On rappelle tout d'abord que l'invention concerne une plaque eutectique comprenant une enveloppe étanche et rigide contenant dans son volume intérieur au moins un MCP configuré pour être sous une première forme lorsque la plaque est dans un état déchargé et sous une deuxième forme lorsque la plaque est dans un état chargé, le MCP présentant des variations volumiques, avantageusement de l'ordre de 5 à 20%, lors des changements de forme caractérisée en ce que la plaque comprend un espace clos configuré pour présenter une variation de volume fonction des variations volumiques du MCP et un indicateur du volume de l'espace clos donnant une indication sur l'état de charge de la plaque.

Avantageusement, suivant des variantes préférées mais non limitatives, l'invention est telle que :
- l'indicateur comprend un élément mécanique soumis aux variations volumiques du MCP ;
- l'indicateur comprend un signal visuel, un signal sonore ou un signal électrique contrôlé par l'élément mécanique. ;
- l'espace clos est agencé dans le volume intérieur de la plaque ;
- le au moins un MCP est un MCP solide - liquide ;
- l'espace clos est défini au moins partiellement par des parois déformables agencées au contact du MCP de sorte à être au moins partiellement soumises aux variations volumiques du MCP lors des changements de forme ;
- le volume intérieur de l'espace clos est soumis à la pression atmosphérique ;
- le volume intérieur de l'enveloppe ne comprend pas de réserve de gaz ;
- l'indicateur comprend une fenêtre formée dans l'enveloppe de la plaque au niveau de l'espace clos de sorte que les variations de volume de l'espace clos soient au moins partiellement visibles de l'extérieur de la plaque ;
- les parois de l'espace clos sont au moins partiellement visibles de l'extérieur de la plaque par la fenêtre de sorte à visualiser les variations de volume de l'espace clos ;
- l'espace clos est cylindrique et disposé transversalement dans l'épaisseur de la plaque ;
- l'espace clos contient un fluide non compressible, préférentiellement qui ne change pas de phase dans la gamme de température de fonctionnement de la plaque, et que l'indicateur comprend un réservoir relié par un raccordement fluidique à l'espace clos et disposé au niveau de la fenêtre soumis à la pression atmosphérique, le fluide circulant entre l'espace clos et le réservoir en fonction de l'état de charge de la plaque ;
- la plaque comprend des renforts de rigidité dans son épaisseur formés par des renfoncements de l'enveloppe et dans lesquels est agencé le réservoir ;
- l'indicateur comprend un contacteur électromécanique associé aux parois de l'espace clos et configuré pour être en position ouverte lorsque les parois sont espacées et pour être en position fermée lorsque les parois sont accolées ;
- le contacteur électromécanique est un interrupteur à lame souple agencé sur les parois de l'espace clos ;
- le contacteur électromécanique est configuré pour contrôler au moins l'un parmi une puce électronique configurée pour émettre des informations indiquant l'état de charge de la plaque, un signal visuel, un signal sonore ;
- l'espace clos présente une forme de doigt de gant s'étendant dans un plan longitudinal de la plaque.
- la plaque est destinée à être transporté dans un contenant ;
- la plaque présente un volume intérieur inférieur à 5 L ;

Suivant un autre aspect, l'invention concerne un procédé d'utilisation d'une plaque eutectique comprenant les étapes suivantes :
- une étape de charge, durant laquelle la plaque eutectique est placée dans un environnement où la température est inférieure à la température de solidification du MCP;
- une étape de vérification de l'état de charge de la plaque par un utilisateur comprenant la vérification de l'indicateur de charge de la plaque ;
- une phase décharge durant laquelle la plaque eutectique est placée dans un environnement où la température est supérieure à la température de fusion du MCP.

Eventuellement, le procédé comprend une étape de vérification de l'état de charge de la plaque par un utilisateur comprenant la vérification de l'indicateur de charge de la plaque.

Suivant un autre aspect, l'invention concerne un contenant de transport comprenant une plaque telle que décrite ci-dessus et une zone de réception d'au moins un produit dont la température doit être maintenue dans une gamme de plus ou moins 4°C, préférentiellement de plus ou moins 2°C.

Une plaque eutectique 1 est classiquement utilisée pour maintenir la température d'un produit. Une plaque eutectique 1 comprend une enveloppe 2, classiquement étanche, et préférentiellement rigide, contenant un matériau à changement de phase 3 (MCP). L'enveloppe 2 est préférentiellement configurée pour ne pas être affectée par les variations de volume du MCP 3, c'est-à-dire que l'enveloppe 2 n'est pas déformée par les variations de volume du MCP 3. On entend par étanche que la plaque 2 ne laisse pas s'échapper des liquides et des gaz contenus dans son volume intérieur.

L'enveloppe 2 présente classiquement une forme parallélépipédique rectangle, définissant une épaisseur 6 perpendiculaire à un plan longitudinal. L'enveloppe 2 comprend des parois préférentiellement rigides définissant un volume intérieur. Le MCP 3 est contenu dans le volume intérieur. L'enveloppe 2 comprend suivant les modes de réalisation représentés sur les figures deux faces longitudinales opposées et quatre faces transversales opposées deux à deux, dites également faces latérales. Les faces longitudinales sont dites face avant 12 et face arrière. Avantageusement, l'enveloppe est close, c'est-à-dire que l'enveloppe est configurée pour ne permettre aucune communication avec l'extérieur. L'enveloppe est entièrement et préférentiellement définitivement fermée. L'enveloppe peut comprend une ouverture servant au remplissage de la plaque par le matériau à changement de phase, décrit ci-après, lors de la fabrication. Cette ouverture éventuelle étant scellée définitivement après remplissage.

Le MCP 3 est préférentiellement un MCP liquide /solide c'est-à-dire présentant deux états physiques différents. Préférentiellement dans le cas de liaison froide une première forme avantageusement liquide, lorsque la plaque est dans un état déchargé et une deuxième forme avantageusement solide, lorsque la plaque est dans un état chargé ; avantageusement, dans la première forme, la densité est plus forte que dans la deuxième forme. Préférentiellement dans le cas de liaison chaude, une première forme avantageusement solide, lorsque la plaque est dans un état déchargé et une deuxième forme avantageusement liquide, lorsque la plaque est dans un état chargé ; avantageusement, dans la première forme, la densité est plus forte que dans la deuxième forme.

Selon l'invention, le MCP 3 est choisi de sorte à présenter une variation volumique entre les deux formes, avantageusement comprise entre 5% et 20%. Préférentiellement, pour une liaison froide, la forme liquide présente un volume moindre que la forme solide et inversement pour une liaison chaude.

La diversité de MCP 3 exploitables dans les plaques eutectiques 1, composés généralement pour une liaison froide, d'une solution aqueuse contenant par exemple du carbonate de sodium, du chlorure de potassium ou du chlorure de sodium permet d'étendre, suivant leur concentration, la gamme de température de maintien. De même pour une liaison chaude, le MCP 3 est choisi parmi des paraffines, des sucres alcooliques ou polyols tels que xylitol, érythritol, sorbitol ou des hydrates de sel.

La présente invention s'applique préférentiellement au transport en liaison froide préférentiellement positive, lors de laquelle les produits sont conservés dans une gamme de température « réglementaire », comprise entre 0 et 3°C. Cette présente invention peut également s'appliquer au transport en liaison chaude, lors de laquelle les produits sont conservés dans une gamme de température « réglementaire », de l'ordre de 63°C.

Le fonctionnement d'une plaque eutectique 1, pour les liaisons froides repose sur la fonte isotherme du MCP 3, contenu dans la plaque et initialement à l'état solide. Ce changement d'état se traduit par une réaction endothermique, c'est à dire absorption de chaleur entrainant une production de froid ce qui permet de maintenir un environnement isolé, à température proche de celle de fusion du MCP.

Cette réaction réversible se distingue par deux phases :
Une phase dite de « charge », durant laquelle la plaque eutectique 1 est placée dans un environnement où la température est inférieure à la température de solidification du MCP 3,

Une phase dite de « décharge » durant laquelle la plaque eutectique 1 est placée dans un environnement où la température est supérieure à la température de fusion du MCP 3. Dans cette situation, le MCP 3 fond en absorbant la chaleur de son environnement, contribuant à son maintien en température.

Le fonctionnement d'une plaque eutectique 1, pour les liaisons chaudes repose sur la solidification isotherme du MCP 3, contenu dans la plaque et initialement à l'état liquide. Ce changement d'état se traduit par une réaction exothermique, c'est à dire production de chaleur entrainant une production de chaud ce qui permet de maintenir un environnement isolé, à température proche de celle de solidification du MCP.

Cette réaction réversible se distingue par deux phases :

Une phase dite de « charge », durant laquelle la plaque eutectique 1 est placée dans un environnement où la température est supérieure à la température de fusion du MCP 3,

Une phase dite de « décharge » durant laquelle la plaque eutectique 1 est placée dans un environnement où la température est inférieure à la température de solidification du MCP 3. Dans cette situation, le MCP 3 se solidifie en dégageant de la chaleur dans son environnement, contribuant à son maintien en température.

La plaque eutectique 1 selon l'invention ne comprend avantageusement pas de réserve d'air 5. C'est-à-dire que le volume intérieur de l'enveloppe 2 est entièrement rempli par le MCP 3, à l'état liquide et à l'état solide. La réserve d'air a pour fonction dans les plaques de l'état de la technique de compenser les variations volumiques du MCP lors des changements de forme.

La plaque eutectique 1 comprend selon l'invention un espace clos 9 configuré pour présenter une variation de volume fonction des variations de volume du MCP 3. Avantageusement, les variations volumiques du MCP sont compensées par l'espace clos 9. Préférentiellement, la plaque ne comprend pas d'autres moyens de compensation des variations volumiques du MCP et notamment pas de réserve de gaz ou d'air c'est-à-dire pas de gaz ou d'air mélangé au MCP dans le volume intérieur de l'enveloppe 2.

La plaque 1 comprend également un indicateur du volume de l'espace clos 9. L'indicateur est destiné à donner une indication sur l'état de charge de la plaque 1.

Avantageusement, l'indicateur comprend un élément mécanique qui est agencé de sorte à être soumis aux variations volumiques du MCP 3. L'élément mécanique contrôle préférentiellement un signal qui peut être visuel, sonore ou bien électrique destiné à fournir l'indication de l'état de charge de la plaque 1 à un utilisateur.

L'espace clos 9 est disposé dans le volume intérieur de l'enveloppe 2 de cette manière, la plaque ne comprend pas d'élément proéminent pouvant être endommagé lors de l'utilisation de la plaque 1 dans des containers adaptés et/ou en cas de chutes ou de chocs. De plus, la forme extérieure de la plaque 1 n'est pas modifiée.

L'espace clos 9 comprend des parois déformables 7 agencées au contact du MCP 3 de sorte à être au moins partiellement soumises aux variations volumiques du MCP 3. Les parois déformables 7 définissent au moins partiellement l'espace clos 9. Les parois déformables 7 sont avantageusement formées d'une membrane souple préférentiellement compatible avec une utilisation alimentaire tel que par exemple un silicone alimentaire. Le choix du matériau est également fait de sorte que les propriétés de déformation et d'élasticité soient stables dans la gamme de température de charge et décharge de la plaque 1. L'espace clos 9 définit un volume intérieur qui est avantageusement soumis à une pression différente de la pression du volume intérieur de l'enveloppe 2, préférentiellement inférieure et selon une possibilité, correspondant à la pression atmosphérique. L'espace clos 9 est configuré pour prendre alternativement deux configurations extrêmes : une configuration comprimée dans laquelle le volume intérieur est réduit, avantageusement à une valeur nulle, les parois déformables 7 sont avantageusement étirées par la pression du MCP 3 qui est avantageusement à l'état solide pour une liaison froide et à l'état liquide pour une liaison chaude et une configuration relaxée dans laquelle le volume intérieur est avantageusement maximal, les parois déformables 7 sont avantageusement dans une position neutre d'équilibre, le MCP 3 est avantageusement à l'état liquide dans le cas de liaison froide et à l'état solide pour une liaison chaude.

Selon l'invention, la variation de volume de l'espace clos 9 correspond à la variation volumique du MCP 3.

L'espace clos 9 est préférentiellement placé à distance des parois latérales de la plaque de sorte à limiter les effets de bords engendrés par le changement de phase du MCP 3. L'espace clos 9 est avantageusement positionné sensible au centre de la plaque 1.

L'espace clos 9 est configuré pour réagir aux variations volumiques du MCP 3. A cet effet, l'espace clos 9 présente une forme sans angle vif, à titre préféré cylindrique, ellipsoïde, doigt de gant... Un doigt de gant est un forme de fourreau correspondant avantageusement sensiblement à la forme d'un doigt d'un gant pour la main.

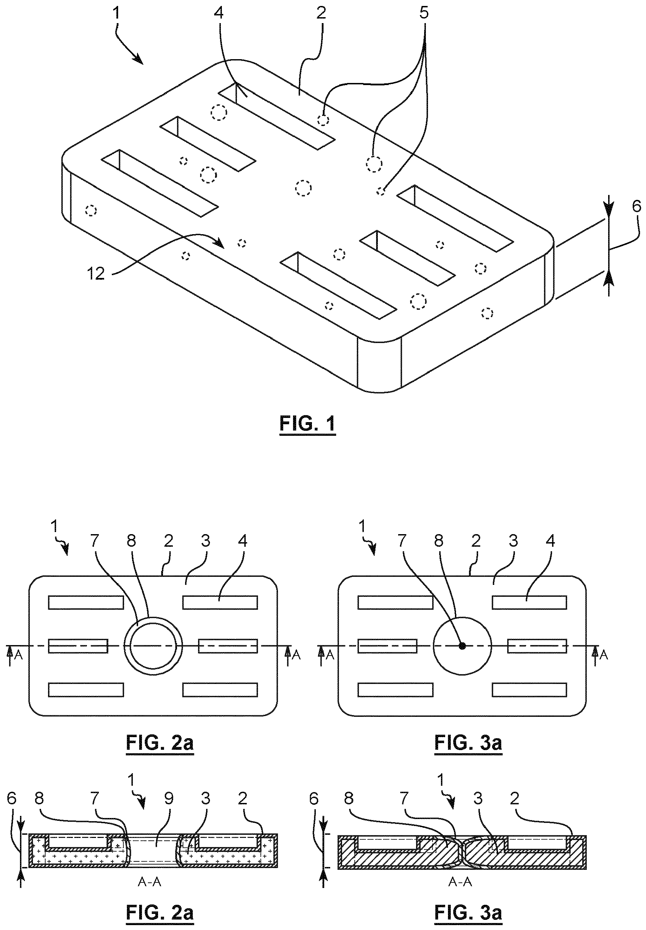

Suivant un premier mode de réalisation illustré aux figures 2 (a et b) et 3 (a et b), l'indicateur comprend une fenêtre 8 formée dans l'enveloppe 2. La fenêtre 8 est une ouverture pratiquée dans au moins une paroi de l'enveloppe 2. Avantageusement, la fenêtre 8 et l'espace clos 9 sont en regard. Selon une possibilité, la fenêtre 8 est fermée par une surface transparente avantageusement agencée dans le prolongement de la paroi dans laquelle la fenêtre 9 est fermée. La surface transparente est par exemple une plaque en plastique transparent comme le poly(méthacrylate de méthyle) (PMMA).

L'espace clos 9 est formé de parois déformables 7 agencées au contact du MCP 3. Les parois déformables 7 sont avantageusement disposées transversalement dans l'épaisseur 6 de la plaque 1, préférentiellement au niveau du centre des faces longitudinales. L'espace clos 9 est avantageusement de forme cylindrique, les parois déformables 7 formant la paroi cylindrique et au moins l'une des bases du cylindre étant formée par la fenêtre 8, préférentiellement par la surface transparente. Telle que représentée aux figures 2 et 3, la plaque 1 comprend une fenêtre 8 traversant l'épaisseur 6 de la plaque 1 de sorte que les deux bases du cylindre formant l'espace clos 9 sont formées par une fenêtre 8, chacune agencée sur une paroi longitudinale de l'enveloppe 2 et notamment pars une surface transparente. De manière alternative, une seule fenêtre 8 peut être formée en face avant 13 de l'enveloppe. La deuxième base du cylindre de l'espace clos étant alors formée par une paroi déformable 7. L'espace clos 9 étant avantageusement soumis à la pression atmosphérique, la surface transparente est préférentiellement perforée de sorte à mettre en commutation l'espace clos 9 et l'environnement extérieur de la plaque 1 en empêchant l'accès à l'espace clos 9 aux débris ou petits morceaux qui pourraient fausser la déformation des parois déformables 7 et/ou endommager celles-ci.

Dans ce mode de réalisation, les parois déformables 7 font partie de l'indicateur de volume de l'espace clos 9 en étant visible pas la fenêtre 8. Dans ce mode de réalisation, les parois déformables sont l'élément mécanique de l'indicateur et également le signal visuel au travers de la fenêtre 8.

Les figures 2a - 2b illustrent une plaque 1 déchargée, dans laquelle le MCP 3 est dans un état à forte densité c'est à dire à l'état liquide pour une liaison froide et à l'état solide dans le cas de liaison chaude. Dans cet état, l'espace clos 9 n'est pas comprimé ; L'utilisateur peut donc constater visuellement l'état relaxé des parois déformable, car l'espace clos 9 présente un vide au centre de la plaque 1.

Les figures 3a - 3b illustrent une plaque totalement chargée, dans laquelle le MCP 3 est dans un état à faible densité c'est à dire à à l'état solide pour une liaison chaude et à l'état solide dans le cas de liaison liaison froide. Dans cet état, l'espace clos 9 est comprimé sous l'action de l'expansion volumique du MCP 3, inhérente à sa solidification. L'utilisateur peut ainsi constater visuellement ce changement des parois déformables 7 au travers de la fenêtre 8 et en déduire l'état chargé de la plaque eutectique 1.

Pour le dimensionnement de l'espace clos 9, la hauteur de l'espace clos 9 est fixée à une valeur égale à la hauteur de la plaque 1, à titre d'exemple préféré 28mm. L'épaisseur 6 des parois déformables 7 est fixée à 2mm. La seule variable est le diamètre de l'espace clos 9 qui est calculé pour chaque type de MCP. Le dimensionnement confirme que le delta de volume de l'espace clos 9 entre son état relaxé et son état comprimé, est égal à l'expansion volumique du MCP 3 contenu dans la plaque 1.

A titre d'exemple, le MCP est choisi parmi des MCP du fournisseur PCM products Ltd. Les produits PlusICE® dénommés PCM eutectic ont une gamme de température de fusion allant de 0 à -114°C.

A titre préféré, le MCP est choisi pour avoir une température de fusion comprise entre -2 et -25°C. On trouve notamment, les produits E-3, E-10 et E-21 de PCM Products Ltd. Ces produits ont respectivement des densités liquide de 1,060 Kg/m³, 1,140 Kg/m³, 1,240 Kg/m³. Leur expansion volumique est standard pour ce type de MCP et est comprise entre 5 et 10%.

Ainsi, le diamètre extérieur de l'espace clos 9, dans une configuration maximale, est avantageusement compris entre 85 et 130 mm, en fonction de l'expansion volumique du MCP sélectionné.

La hauteur de l'espace clos est déterminée par l'épaisseur de la plaque eutectique. A titre d'exemple, compris entre 25 et 30mm, plus préférentiellement 28mm.

Le volume extérieur de l'espace clos 9 étant ainsi avantageusement compris entre 15 et 38 cl.

Avantageusement, la différence de masse de MCP entre une plaque équipée du dispositif et une plaque non équipée correspondant à la différence de quantité de MCP contenu dans la plaque 1 entre la configuration de l'état de la technique et celle selon l'invention a montrée des valeurs positives traduisant un gain de MCP dans la plaque. Pour la compréhension, il est important de noter que la quantité de MCP contenue dans les plaques de l'état de la technique, est identique et ce quelle que soit la nature du MCP et leur différence en termes d'expansion volumique. Le volume d'air réservé étant identique pour toutes les plaques, il est dans certains cas surdimensionné, conduisant à un gain possible sur la capacité thermique de la plaque (qui d'autant plus grand que le coefficient d'expansion volumique du MCP est faible).

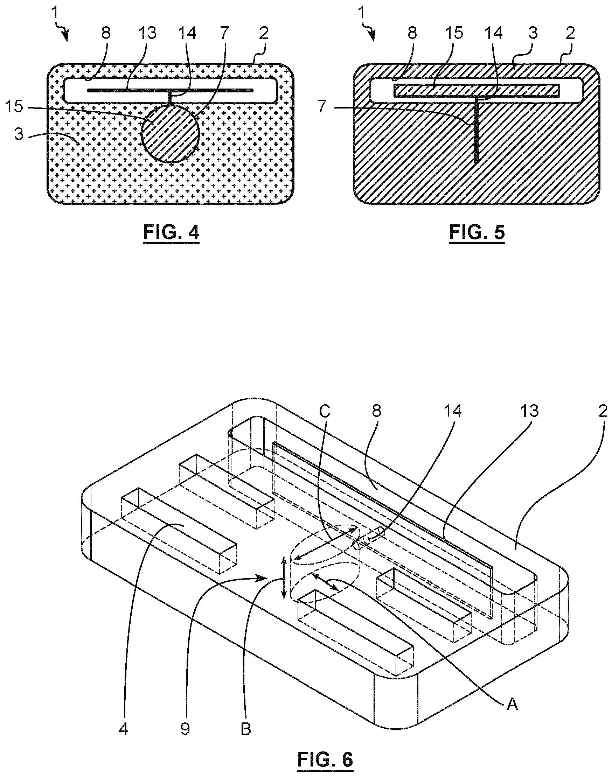

Suivant un deuxième mode de réalisation illustré aux figures 4 et 5, l'espace clos 9 contient un fluide 15 non compressible, c'est-à-dire préférentiellement qui ne change pas de phase dans la gamme de température de fonctionnement de la plaque. Le fluide 15 est avantageusement sans risque toxicologique. Le fluide 15 est choisi pour être monophasique sur la gamme de température de charge et décharge de la plaque 1. Le fluide 15 est par exemple une solution aqueuse contenant au moins 50% en masse d'éthanol ou une huile dont les propriétés et la consistance ne sont pas altérées par les contraintes d'environnement du système. Suivant ce mode de réalisation, l'indicateur comprend un réservoir 13 relié à l'espace clos 9 par un raccordement fluidique 14. Le réservoir 13 est par exemple soumis à une pression différente de celle régnant dans le volume intérieur de l'enveloppe 2, préférentiellement il est soumis à la pression atmosphérique. Toutefois, les pressions auxquelles sont soumis le réservoir 13 et le volume intérieur de l'enveloppe 2 ne sont pas nécessairement différentes, notamment lorsque le MCP est en phase liquide pour une liaison froide. Le fluide 15 et le réservoir 13 sont un indicateur du volume de l'espace clos 9.

La plaque comprend une fenêtre 8 au niveau , au regard, de laquelle est disposé le réservoir 13. De même que pour le premier mode de réalisation, la fenêtre 8 comprend préférentiellement une surface transparente rendant visible le réservoir 13 depuis l'extérieur de la plaque 1. La fenêtre 8 reprend les mêmes caractéristiques que la fenêtre 8 décrite dans le premier mode de réalisation ci-dessus. Le réservoir 13 est préférentiellement transparent de sorte que la présence de fluide 15 puisse être identifiée par l'utilisateur. De même, le fluide 15 est préférentiellement coloré de sorte à être clairement identifiable par un utilisateur.

L'espace clos 9 est dans ce mode de réalisation complétement interne à la plaque 1. L'espace clos 9 est défini par des parois déformables 7. Suivant une possibilité, l'espace clos 9 est de forme ellipsoïde.

Dans ce mode de réalisation, sous la contrainte induite par l'expansion volumique du MCP 3, l'espace clos 9 est comprimé, entrainant le transfert du fluide 15 vers le réservoir 13 visible depuis l'extérieur de la plaque1 avantageusement par la fenêtre 8. Le contrôle visuel du réservoir 13 attestera de l'état de solidification du MCP et donc de la charge de la plaque.

L'espace clos 9 et le réservoir 13 n'ont pas forcément la même forme ou la même composition, mais ils contiennent le même volume une fois remplis. La quantité de fluide 15 doit être sensiblement égale au volume de l'espace clos 9 ou du réservoir 13 plein.

La plaque 1 comprend couramment des renforts 4 de rigidité formés par des renfoncements des parois longitudinales de l'enveloppe 2 dans l'épaisseur 6 de la plaque 1. Avantageusement, le réservoir 13 est disposé dans l'un de ces renfoncements. Cette disposition permet notamment d'éviter que l'indication de charge soit faussée par un élément extérieur, par exemple lors de l'empilement des plaques 1, le poids des plaques supérieures peut entrainer une déformation de l'espace clos 9 et/ou du réservoir 13.

Les figures 4 et 5 illustrent le fonctionnement de l'invention suivant ce deuxième mode de réalisation.

La figure 4 présente une plaque 1 déchargée, dans laquelle le MCP 3 est est dans un état à forte densité c'est à dire à l'état liquide pour une liaison froide et à l'état solide dans le cas de liaison chaude.. Dans cet état, l'espace clos 9 contient la totalité du fluide 15 tandis que le réservoir 13 est complétement vidé et comprimé par la pression atmosphérique. La figure 5 présente une plaque 1 totalement chargée dans laquelle le MCP 3 est dans un état à faible densité c'est à dire à à l'état solide pour une liaison chaude et à l'état liquide dans le cas de liaison liaison froide.. Le MCP 3 a complètement comprimé l'espace clos 9. La totalité du fluide 15 s'est donc déplacé dans le réservoir 13. L'utilisateur peut ainsi constater l'état chargé de la plaque eutectique 1 par visualisation du fluide 15 dans le réservoir 13.

La figure 6 illustre les hypothèses retenues pour le dimensionnement d'une plaque selon ce deuxième mode de réalisation. La forme retenue pour l'espace clos 9 est une ellipsoïde pour laquelle la largeur (C) et la hauteur (B) sont fixées. Ces grandeurs sont figées pour s'adapter au volume disponible dans la plaque 1. Ainsi la largeur C est fixée à par exemple 180 mm pour laisser de la place à d'éventuels renforts 4 qui seront placés dans le sens de la longueur. La hauteur B de l'espace clos 9 est fixée à 20mm, pour conserver un jeu de 5 mm entre les parois de la plaque 1 et l'espace clos 9. Si la plaque dispose de 30mm de hauteur interne, laisser un jeu entre les parois de la plaque 1 et l'espace clos 9 permettra de limiter les effets de bord lors de la solidification ou inversement de la liquéfaction du MCP 3. La longueur l'espace clos 9 est donc la variable ajustable qui est calculée pour s'adapter à chaque MCP 3 pouvant être contenu dans les plaques. Le dimensionnement assure que le delta de volume de la cavité entre son état relaxé et son état contracté, soit égal à l'expansion volumique du MCP 3 contenu dans la plaque 1.

Par ailleurs, l'épaisseur des parois déformables 7 de l'espace clos 9 est fixée à 2mm. Cependant, cette valeur arbitraire peut être modifiée dans le dimensionnement.

A titre d'exemple, le MCP est choisi parmi des MCP du fournisseur PCM products Ltd. Les produits PlusICE® dénommés PCM eutectic ont une gamme de température de fusion allant de 0 à -114°C.

A titre préféré, le MCP est choisi pour avoir une température de fusion comprise entre -2 et -25°C. On trouve notamment, les produits E-3, E-10 et E-21 de PCM Products Ltd. Ces produits ont respectivement des densités liquide de 1,060 Kg/m³, 1,140 Kg/m³, 1,240 Kg/m³. Leur expansion volumique est standard pour ce type de MCP et est comprise entre 5 et 10%.

Ainsi, la longueur de l'espace clos 9, dans sa configuration maximale, est avantageusement compris entre 130 et 240 mm, en fonction de l'expansion volumique du MCP sélectionné.

La hauteur de l'espace clos est déterminée par l'épaisseur de la plaque eutectique. A titre d'exemple, compris entre 15 et 25mm, plus préférentiellement 20mm.

Le volume extérieur de l'espace clos 9 étant ainsi avantageusement compris entre 20 et 50 cl.

Avantageusement, la différence de masse de MCP entre une plaque équipée du dispositif et une plaque non équipée correspondant à la différence de quantité de MCP contenu dans la plaque 1 entre la configuration de l'état de la technique et celle selon l'invention est assez faible et ne modifie pas significativement les performances thermiques des plaques.

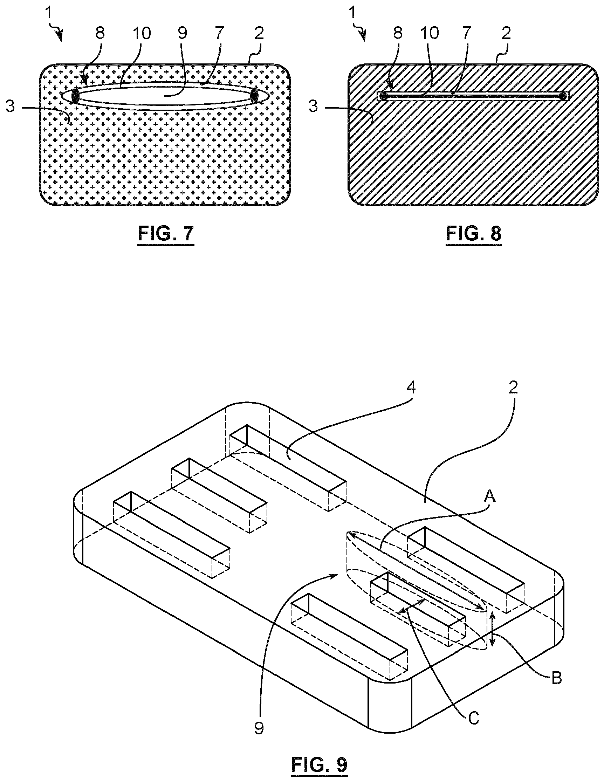

Suivant un troisième mode de réalisation de l'invention illustré aux figures 7-8, l'indicateur comprend un contacteur électromécanique 10 associé aux parois déformables 7 de l'espace clos 9. Le contacteur 10 est configuré pour prendre alternativement une position ouverte et une position fermée. Le contacteur est configuré pour être en position ouverte, c'est-à-dire ne pouvant pas conduire de courant électrique, lorsque les parois 7 sont espacées, c'est-à-dire préférentiellement que la plaque 1 est déchargée et que le MCP 3 est est dans un état à forte densité c'est à dire à l'état liquide pour une liaison froide et à l'état solide dans le cas de liaison chaude.. Le contacteur est configuré pour être en position fermée, c'est-à-dire apte à conduire un courant électrique, lorsque les parois 7 sont accolées, c'est-à-dire préférentiellement que la plaque 1 est chargée et que le MCP 3 est dans un état à faible densité c'est à dire à à l'état solide pour une liaison chaude et à l'état liquide dans le cas de liaison liaison froide.

Selon une possibilité, le contacteur électromécanique 10 est un interrupteur à lame souple agencé sur les parois 7 de l'espace clos 9.

L'indicateur comprend avantageusement un signal sonore, visuel ou électrique contrôlé par le contacteur électromécanique 10.

L'espace clos 9 est suivant ce mode de réalisation complétement interne à l'enveloppe 2 de la plaque 1. Le signal visuel, sonore ou électrique est relié au contacteur électromécanique 10 par une sortie électrique avantageusement disposée sur une paroi transversale de l'enveloppe 2. Le signal visuel, sonore ou électrique est lui préférentiellement agencé au niveau de renforts de rigidité 4 formés par des renfoncements des parois longitudinales de l'enveloppe 2 dans l'épaisseur 6 de la plaque 1. Le signal peut être autoalimenté ou passif.

A titre d'exemple, le signal est un voyant lumineux. Le contacteur 10 agit comme un interrupteur électrique ouvrant ou fermant le circuit suivant l'état de charge de la plaque 1. Lorsque la plaque 1 est chargée et que le contacteur 10 est fermé, le voyant est allumé et indique l'état chargé de la plaque. Le voyant pourrait être une LED alimentée électriquement par une pile.

Selon un autre exemple, le signal est signal électrique alimentant une puce électronique, à l'image des puces RFID ou NFC, contenue dans la plaque et émettant vers l'extérieur. Ces puces ont la particularité de pouvoir recevoir et réémettre des informations lorsqu'elles sont activées par un transfert d'énergie issu d'un champ électromagnétique tel un scan. Comme précédemment le contacteur 10 joue le rôle d'un interrupteur électrique ouvrant ou fermant un circuit. A l'usage, en balayant les puces à l'aide d'un scanner, il sera possible de s'informer de l'état de charge des plaques eutectiques. Cette solution offre par ailleurs l'avantage de ne pas nécessiter d'alimentation électrique.

Les figures 7-8 illustrent le fonctionnement l'invention suivant ce troisième mode de réalisation. La figure 7 présente une plaque 1 déchargée, dans laquelle le MCP 3 est à l'état liquide. Dans cet état, l'espace clos 9 n'est pas comprimé, les lames du contacteur 10 ne sont pas en contact maintenant l'interrupteur en position ouverte.

La figure 8 présente une plaque 1 totalement chargée. Dans cet état, l'espace clos 9 est complètement comprimé par l'expansion volumique du MCP 3 du fait de sa solidification ou de sa liquéfaction suivant le type de MCP et le type de liaison chaude ou froide. Les lames ont cloqué et sont en contact, maintenant l'interrupteur en position fermée.

La figure 9 illustre les hypothèses retenues pour le pré-dimensionnement d'une plaque suivant ce mode de réalisation.

L'espace clos 9 pourrait être disposé tel qu'illustré. Cette zone, relativement centrale, n'est pas trop sujette aux effets de bord lors de la solidification ou de la liquéfaction du MCP 3. Elle permet par ailleurs d'envisager la fixation de l'espace clos 9 au niveau d'une paroi transversale de la plaque 1, par exemple par l'extérieur de la plaque 1, même une fois celle-ci fabriquée.

Dans ce modèle, la largeur (C) et la hauteur (B) de l'espace clos 9, conditionnées par la disposition des renforts 4 et par la hauteur interne de la plaque 1, ont été respectivement fixées à 40 mm et à 20mm. En figeant ces valeurs, il est possible de conserver un jeu de 7 mm entre le bord des renforts 4 et de 5 mm entre les parois de la plaque 1, avantageusement pour limiter l'influence des effets de bords. Le dimensionnement assure que le delta de volume de l'espace clos 9 entre son état relaxé et son état contracté, est égal à l'expansion volumique du MCP 3 contenu dans la plaque 1. Par ailleurs, l'épaisseur des parois déformables 7 de l'espace clos est fixée à 2 mm et l'épaisseur des lames du contacteur 10 est fixée arbitrairement à 0.8mm.

A titre d'exemple, le MCP est choisi parmi des MCP du fournisseur PCM products Ltd. Les produits PlusICE® dénommé PCM eutectic ont une gamme de température de fusion allant de 0 à -114°C.

A titre préféré, le MCP est choisi pour avoir une température de fusion comprise entre -2 et -25°C. On trouve notamment, les produits E-3, E-10 et E-21 de PCM Products Ltd. Ces produits ont respectivement des densités liquide de 1,060 Kg/m³, 1,140 Kg/m³, 1,240 Kg/m³. Leur expansion volumique est standard pour ce type de MCP et est comprise entre 5 et 10%.

Ainsi, la longueur extérieure de l'espace clos 9 est avantageusement compris entre 270 et 450 mm, en fonction de l'expansion volumique du MCP sélectionné.

Le volume extérieur de l'espace clos 9 étant ainsi avantageusement compris entre 15 et 35 cl.

Avantageusement, la différence de masse de MCP entre une plaque équipée du dispositif et une plaque non équipée correspondant à la différence de quantité de MCP contenu dans la plaque 1 entre la configuration de l'état de la technique et celle selon l'invention est assez faible et ne modifie pas significativement les performances thermiques des plaques. Ce mode de réalisation est peu intrusif, n'imposant pas de modifier l'implantation des renforts 4 de rigidité.

A titre d'exemple, la plaque selon l'invention présente des dimensions telles que ci-après :
Epaisseur : 2 à 10 cm, préférentiellement de 2 à 6 cm préférentiellement 3 cm.
Profondeur: 10 cm à 80 cm, préférentiellement de 20 à 60 cm, préférentiellement de 30 cm.
Longueur : 10 cm à 80 cm, préférentiellement de 20 à 60 cm, préférentiellement de 50 cm.

Le volume intérieur de la plaque est inférieur à 5L et avantageusement compris entre 250ml et 4L.

La longueur étant définie par la plus grande dimension de la plaque et la profondeur étant définie par la dimension perpendiculaire et dans un même plan à la longueur.

L'invention concerne également un procédé d'utilisation d'une plaque eutectique 1 telle que décrite ci-dessus.

Le procédé comprend les étapes suivantes :
- une étape de charge, durant laquelle la plaque eutectique 1 est placée dans un environnement où la température est inférieure à la température de transformation d'une première forme vers une deuxième forme du MCP 3,
- une étape de vérification de l'état de charge de la plaque par l'utilisateur comprenant la vérification de l'indicateur de charge de la plaque 1,
- une phase décharge durant laquelle la plaque eutectique 1 est placée dans un environnement où la température est supérieure à la température de transformation de la deuxième forme vers la première forme du MCP 3.

Plus précisément,le procédé comprend les étapes suivantes :
- une étape de charge, durant laquelle la plaque eutectique 1 est placée dans un environnement où la température est inférieure à la température de solidification du MCP 3,
- une étape de vérification de l'état de charge de la plaque par l'utilisateur comprenant la vérification de l'indicateur de charge de la plaque 1,
- une phase décharge durant laquelle la plaque eutectique 1 est placée dans un environnement où la température est supérieure à la température de fusion du MCP 3.

Eventuellement, le procédé comprend une étape ultérieure de vérification de l'état de charge de la plaque par l'utilisateur comprenant la vérification de l'indicateur de charge de la plaque 1.

L'invention concerne également un contenant de transport comprenant une plaque telle que décrite ci-dessus et une zone de réception d'au moins un produit dont la température doit être maintenue dans une gamme de plus ou moins 4°C, préférentiellement de plus ou moins 2°C. Avantageusement, le contenant est du type isotherme, c'est-à-dire un contenant dans lequel la température est sensiblement constante. Le contenant définit un volume intérieur. Le contenant est configuré pour recevoir dans son volume interieur une plaque eutectique selon l'invention et un produit dont la température doit être maintenue dans une certaine gamme restreinte de température, notamment dans le but des liaisons chaudes ou froides décrites ci-dessus.

### REFERENCES

- 1.: Plaque eutectique
- 2.: Enveloppe
- 3.: MCP
- 4.: Renfort de rigidité
- 5.: Réserve d'air
- 6.: Epaisseur
- 7.: Parois déformables
- 8.: Fenêtre
- 9.: Espace clos
- 10.: Contacteur électromécanique
- 11.: Circuit électrique
- 12.: Face avant
- 13.: Réservoir
- 14.: Raccordement fluidique
- 15.: Fluide

## Revendications

1. Plaque eutectique (1) comprenant une enveloppe (2) étanche et rigide contenant dans son volume interieur au moins un Matériau à Changement de Phase (3) configuré pour être sous une première forme lorsque la plaque (1) est dans un état déchargé et sous une deuxième forme lorsque la plaque est dans un état chargé, le MCP (3) présentant des variations volumiques lors des changements de forme **caractérisée en ce que** la plaque (1) comprend un espace clos (9) configuré pour présenter une variation de volume fonction des variations volumiques du MCP (3) et un indicateur du volume de l'espace clos (9) donnant une indication sur l'état de charge de la plaque (1).

2. Plaque (1) selon la revendication précédente dans laquelle l'indicateur comprend un élément mécanique soumis aux variations volumiques du MCP (3).

3. Plaque (1) selon l'une quelconque des revendications précédentes dans laquelle le volume intérieur de l'enveloppe ne comprend pas de réserve de gaz.

4. Plaque (1) selon la revendication 2 dans laquelle l'indicateur comprend un signal visuel, un signal sonore ou un signal électrique contrôlé par l'élément mécanique.

5. Plaque (1) selon l'une quelconque des revendications précédentes dans laquelle l'espace clos (9) est agencé dans le volume intérieur de la plaque (1).

6. Plaque (1) selon l'une quelconque des revendications précédentes dans laquelle le au moins un MCP (3) est un MCP solide - liquide.

7. Plaque (1) selon l'une quelconque des revendications précédentes dans laquelle l'espace clos (9) est défini au moins partiellement par des parois déformables (7) agencées au contact du MCP (3) de sorte à être au moins partiellement soumises aux variations volumiques du MCP (3) lors des changements de forme.

8. Plaque (1) selon l'une quelconque des revendications précédentes dans laquelle le volume intérieur de l'espace clos (9) est soumis à la pression atmosphérique.

9. Plaque (1) selon l'une quelconque des revendications 1 à 8 dans laquelle l'indicateur comprend une fenêtre (8) formée dans l'enveloppe de la plaque (1) au niveau de l'espace clos (9) de sorte que les variations de volume de l'espace clos (9) soient au moins partiellement visibles de l'extérieur de la plaque (1).

10. Plaque (1) selon la revendication précédente dans laquelle les parois de l'espace clos (9) sont au moins partiellement visibles de l'extérieur de la plaque (1) par la fenêtre (8) de sorte à visualiser les variations de volume de l'espace clos (9).

11. Plaque (1) selon l'une quelconque des deux revendications précédentes dans laquelle l'espace clos (9) est cylindrique et disposé transversalement dans l'épaisseur (6) de la plaque.

12. Plaque (1) selon l'une quelconque des revendications précédentes en combinaison de la revendication 7 dans laquelle l'indicateur comprend un contacteur électromécanique (10) associé aux parois de l'espace clos (9) et configuré pour être en position ouverte lorsque les parois sont espacées et pour être en position fermée lorsque les parois sont accolées.

13. Plaque selon la revendication précédente dans laquelle le contacteur électromécanique (10) est un interrupteur à lame souple agencé sur les parois de l'espace clos (9).

14. Plaque selon l'une quelconque des deux revendications précédentes dans laquelle le contacteur électromécanique (10) est configuré pour contrôler au moins l'un parmi une puce électronique configurée pour émettre des informations indiquant l'état de charge de la plaque (1), un signal visuel, un signal sonore.

15. Plaque selon l'une quelconque des deux revendications précédentes dans laquelle l'espace clos (9) présente une forme de doigt de gant s'étendant dans un plan longitudinal de la plaque (1).

16. Procédé d'utilisation d'une plaque (1) eutectique suivant l'une quelconque des revendications précédentes **caractérisé en ce qu'**il comprend les étapes suivantes :
- une étape de charge, durant laquelle la plaque (1) eutectique est placée dans un environnement où la température est inférieure à la température de solidification du MCP (3) ;
- une étape de vérification de l'état de charge de la plaque par un utilisateur comprenant la vérification de l'indicateur de charge de la plaque (1) ;
- une phase de décharge durant laquelle la plaque eutectique est placée dans un environnement où la température est supérieure à la température de fusion du MCP.
